Europäisches Patentamt

European Patent Office

Office européen des brevets

(11) Veröffentlichungsnummer: **0 199 349**
**A2**

# (12) EUROPÄISCHE PATENTANMELDUNG

(21) Anmeldenummer: **86105623.2**

(22) Anmeldetag: **23.04.86**

(51) Int. Cl.⁴: **B29C 61/10**

(30) Priorität: **26.04.85 DE 3515242**

(43) Veröffentlichungstag der Anmeldung:
**29.10.86 Patentblatt 86/44**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Bachel, Ernst**
**Erlenweg 8**
**D-8085 Geltendorf(DE)**
Erfinder: **Giebel, Wolfgang, Dipl.-Ing. (FH)**
**Mathildenstrasse 31 a**
**D-8033 Planegg(DE)**

(54) **Längsgeteilte Manschette aus schrumpfbarem Material.**

(57) Die Erfindung betrifft eine längsgeteilte Manschette (1) aus schrumpfbarem Material mit einem Rastverschluß entlang der längskanten. Der eine Längsrand weist eine Längsnut (10) aus zwei längsverlaufenden Schenkeln (8 ,9) auf, während der zweite Längsrand mit einem Hakenteil (4), der einen federnden Ansatz (5) aufweist, versehen ist. Außerdem ist der Verschlußbereich (4-6-8-9) höher vernetzt als der schrumpfende Manschettenbereich - (2).

## FIG 1

Rank Xerox

EP 0 199 349 A2

Längsgeteilte Manschette aus schrumpfbarem Material.

Die Erfindung betrifft eine längsgeteilte Manschette aus schrumpfbarem Material mit einem Rastverschluß entlang der Längskanten, der entlang einer Längskante eine Längsnut und entlang der zweiten Längskante ein zur Längsnut passendes Rastelement aufweist.

Aus der DE-OS 1 947 057 ist bereits ein Verfahren zum Abdecken von Verbindungen elektrischer Kabel und Rohre bekannt, bei dem eine unter Wärmeeinwirkung schrumpfende Umhüllung über die Verbindungsstelle gebracht, durch Einrasten von Rastelementen entlang der Ränder verschlossen und schließlich auf den umhüllten Gegenstand niedergeschrumpft wird. Die Verschlußelemente bestehen aus einer Längsnut entlang des einen Längsrandes und aus einem dazu passenden Rastelement entlang des zweiten Längsrandes, wobei beide Elemente so angeordnet sind, daß ein nach außen von der Umhüllung abstehender Wulst entsteht. Dies hat besonders bei großen Schrumpfkräften den Nachteil, daß der Verschlußbereich auseinandergezogen wird, so daß ein Längsspalt entstehen kann, der zu Undichtigkeiten führt. Weiterhin besteht die Gefahr, daß sich bei großen Schrumpfkräften der Verschluß wieder lösen kann, da das Rastelement aus der Nut in Richtung der wirkenden Kräfte herausspringt. Im übrigen erfordert das Eindrüken des Rastelementes größere Schließkräfte, wenn sichergestellt werden soll, daß der Verschluß auch bei großer Beanspruchung, insbesondere während des Schrumpfvorganges geeignet ist.

Für vorliegende Erfindung ergibt sich nun die Aufgabe, für eine längsgeteilte Manschette einen Verschluß zu schaffen, der für große Schrumpfkräfte geeignet ist und der sich trotzdem in einfacher und leichter Weise verschließen läßt, wobei die Kräfteverteilung im Verschlußbereich so auszulegen ist, daß er möglichst drehmomentenfrei ist und somit bei der Einwirkung der Kräfte während des Schrumpfens sicher verschlossen bleibt. Die gestellte Aufgabe wird nun mit einer längsgeteilten Manschette der eingangs erläuterten Art dadurch gelöst, daß der Verschlußbereich einen höheren Vernetzungsgrad aufweist als der schrumpfende Manschettenbereich, daß die Längsnut entlang des einen ungeweiteten Längsrandes aus zwei gegeneinander geneigten, längs verlaufenden Schenkeln gebildet ist, daß das Rastelement am anderen ungeweiteten Längsrand hakenförmig ausgebildet ist, wobei der Winkel des zurückgebogenen, zur Längsnut weisenden Hakenteils im Neigungswinkel des einen hinterschnittenen Schenkels der Längsnut angepaßt ist, daß das Rastelement einen federnden Ansatz aufweist, der auf die Weite des Nutgrundes abgestimmt ist und daß der Längsspalt der Längsnut so gewählt ist, daß das Rastelement mit dem federnden Ansatz rastend eindrückbar ist.

Die Vorteile bei der Manschette gemäß der Erfindung liegen nun besonders darin, daß der Einrastmechanismus in sicherer und einfacher Weise betätigt werden kann, wobei unbeabsichtigtes Öffnen nicht erfolgen kann und daß durch die Dimensionierung der Verschlußelemente ein möglichst drehmomentenfreier Verschlußbereich geschaffen ist, durch den ein sicherer Verschluß auch während des kritischen Schrumpfvorganges gewährleistet wird. In der Wahl des Vernetzungsvrhältnisses zwischen dem schrumpfenden Teil der Manschette und dem nicht schrumpfenden Verschlußbereich kann außerdem erreicht werden, daß die Reißmöglichkeit, besonders bei großen Durchmessern verringert wird. Dieses Verhältnis wird so gewählt, daß sich der Verschlußbereich bei zu hohen Schrumpfkräften in gewissen Grenzen dehnt. Aufgrund dieser Dehnung lassen die Schrumpfkräfte nach und die an sich bei großen Durchmessern noch sehr dünne Wandung des schrumpfenden Teiles der Manschette wird vor Einreißen geschützt. Die hierfür in Frage kommenden Einflußgrößen sind die Dicke des Verschlußbereiches, die Dicke des Hakenteiles, der Vernetzungsgrad dieser Elemente und die herrschende Temperatur während des Schrumpfens. Durch diese Größen ist somit auch in gewissen Grenzen der Schrumpffaktor beeinflußbar, da der Verschlußbereich als Dehnungsglied anzusehen ist. Dabei ist auch unschädlich, daß der Einrastmechanismus durch die Dehnung unwirksam wird, weil in dem Moment, in dem die Dehnung im Verschlußbereich einsetzt, das zu umhüllende Teil von der Manschette bereits fest umgeben und durch die hakenförmige Ausbildung der Verschlußelemente ausreichend gesichert ist, das heißt, unbeabsichtigtes Öffnen wird nicht möglich.

Günstige Dehnfaktoren für den Verschlußbereich lassen sich erzielen, wenn die Wandstärken der Schenkel der Längsnut im Bereich von 1 bis 1,8 mm, die des Hakenteils im Bereich von 1,2 bis 2 mm und die des Reckbereiches im Bereich von 2 bis 3 mm gewählt werden. Dabei ist zweckmäßig, die Übervernetzung im Verschlußbereich 2- bis 6-fach größer als im Reckbereich zu wählen.

Die Erfindung wird nun anhand von drei Figuren näher erläutert.

Figur 1 zeigt die längsgeteilte Manschette in geschlossenem Zustand.

Figur 2 zeigt die Einzelheiten des Verschlusses.

Figur 3 zeigt ein einfaches Verschließwerkzeug.

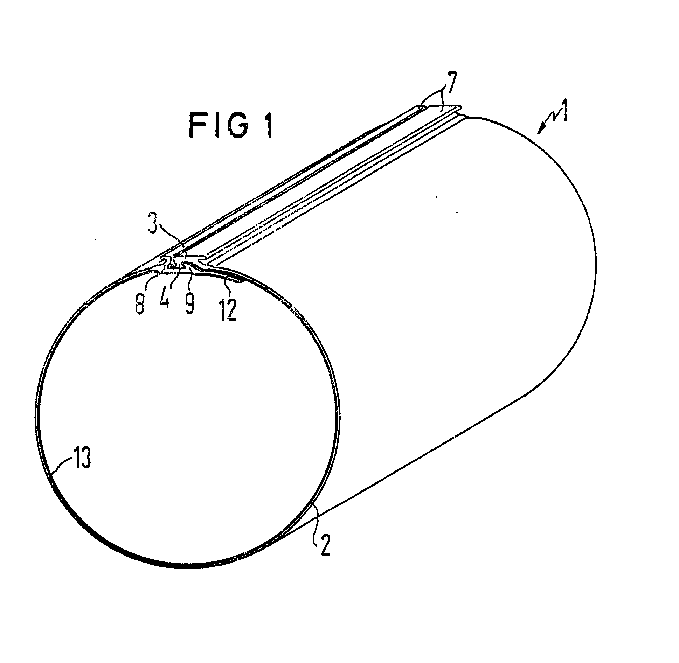

In Figur 1 ist die Manschette 1 gemäß der Erfindung insgesamt dargestellt und verdeutlicht die Anordnung der Verschlußelemente im geschlossenen Zustand. Dabei wird erkenntlich, daß das Rastelement 3 mit seinem Hakenteil 4 in die Längsnut, die aus zwei Schenkeln 8 und 9 des zweiten Längsrandes gebildet ist, rastend eingeführt ist. Nach außen hin treten besonders die beiden längs verlaufenden Ansätze 7 in Erscheinung, die zum Entlangführen eines Verschlußwerkzeuges dienen. Der innen liegende Manschettenrand des Verschlußbereiches ist durch einen Untertritt 12 verlängert und dient auf diese Weise als Stützung für den darüber liegenden Längsrand und verbessert außerdem die Dichtungsverhältnisse entlang des Längsspaltes. Die Innenfläche der Manschette 1 ist bis in den Verschlußbereich hinein mit einer Beschichtung aus einem Schmelzkleber versehen, durch den die sichere Abdichtung zum umhüllten Gegenstand hin erfolgt. Bezüglich des verwendeten Kunststoffmaterials ist festzustellen, daß der Verschlußbereich einer höheren Vernetzung unterzogen ist als der - schrumpfende, aufgeweitete Manschettenbereich 2, der schließlich auf den zu umhüllenden Gegenstand aufgeschrumpft wird.

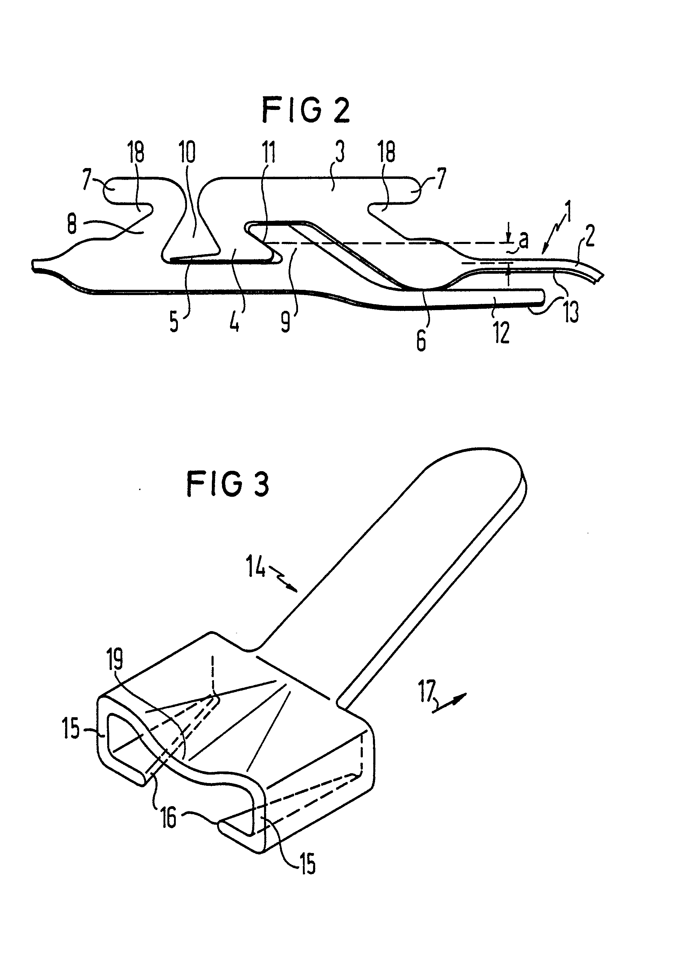

Die Figur 2 erläutert nun die Einzelheiten des Verschlußbereiches 4-6-8-9 der Manschette 1. So geht daraus hervor, daß das Aufnahmeteil für das Rastelement 3 als Längsnut 10 durch zwei auswärts gerichtete, längsverlaufende Schenkel 8 und 9 gebildet wird. Diese beiden Schenkel 8 und 9 sind unter geeigneten Winkeln gegeneinander geneigt, so daß eine Hinterschneidung entsteht, das heißt, der äußere Längsspalt der Längsnut 10 ist enger als der Nutgrund.

Das Rastelement 3 besitzt einen zurückgebogenen, jedoch ebenfalls längsverlaufenden Hakenteil 4, wobei der Rückbiegewinkel dem Neigungswinkel des zugehörigen Schenkels 9 der Längsnut 10 entspricht. Dieses Hakenteil 4 weist am Ende einen federnd abstehenden, lippenförmigen Ansatz 5 auf, der so bemessen ist, daß er im eingedrückten Zustand gerade die Weite des Nutgrundes ausfüllt. Auf diese Weise dient er als Verriegelungselement und verhindert, daß das Hakenteil 4 unbeabsichtigt aus der Längsnut 10 wieder herausspringt. Das Rastelement 3 ist an seinem zum schrumpfbaren Manschettenteil 2 hin gerichteten Ende als Stützelement 6 ausgebildet, mit dem sich das Rastelement 3 nach dem Verschließen gegen den Untertritt 12 abstützt. Dadurch können die Kräfteverhältnisse im Verschlußbereich 4-6-8-9 so ausgeglichen werden, daß kaum Drehmomente auftreten. Dabei wird angestrebt, daß das Versetzungsmaß a zwischen dem mittleren Kraftübertragungspunkt 11 und der mittleren Wandungsebene des geweiteten Manschettenbereiches 2 möglichst gering, vorzugsweise gleich null ist. Dies ist der Idealfall und entspricht einem einachsigen Spannungszustand, das heißt, aus den Kraftangriffspunkten heraus wirkt kein zusätzliches Drehmoment auf den Verschlußbereich, das die Dichtungs-bzw. Verschlußverhältnisse beeinträchtigt. Der vom Rastelement 3 nicht überdeckte Schenkel 8 ist, wie auch das Rastelement 3 selbst, mit je einem seitlich gegensinnig abstehenden Ansatz 7 versehen. Diese Ansätze 7 bilden mit dem Schenkel 8 bzw. dem abgewinkelten Teil des Rastelementes 3 jeweils eine längsverlaufende Außennut 18. Diese Außennuten 18 dienen der Führung eines einfachen Verschließwerkzeuges, mit dem infolge seiner Formgebung das Rastelement 3 in die Längsnut 10 eingedrückt werden kann. Dieses Verschließwerkzeug ist eine einfache Hilfe und erleichtert den Verschlußwerkzeug besonders bei größeren und damit steiferen Verschlußelementen und langen Manschetten.

Die Figur 3 erläutert nun ein derartiges Verschließelement 14, das im wesentlichen U-förmig zusammengefaßte, keilförmige Druckelemente 16 aufweist, die in den vorher beschriebenen Außennuten 18 eingeführt werden. Durch Entlangziehen des Verschließwerkzeuges 14 in der angedeuteten Richtung 17 in den als Führung dienenden Außennuten 18 des Verschlusses wird infolge einer Eindellung 19 im Mittelbereich des Verschließwerkzeuges 14 das Rastelement 3 in die Längsnut 10 eingedrückt. Der Abstand der U-förmigen Seitenschenkel 15 entspricht dem Abstand der beiden Außennuten 18 im geschlossenen Zustand.

Bezugszeichenliste

1 -Manschette

2 -aufgeweiteter Manschettenbereich

3 -Rastelement

4 -Hakenteil

5 -Ansatz

6 -Stützelement

7 -längsverlaufender Ansatz

8 -Schenkel

9 -Schenkel

10 -Längsnut

11 -Untertritt

13 -Schmelzkleber

14 -Verschließwerkzeug

15 -Seitenschenkel

16 -Druckelement

17 -Richtungspfeil

18 -Außennut

19 -Eindellung

**Ansprüche**

1. Längsgeteilte Manschette aus schrumpfbarem Material mit einem Rastverschluß entlang der Längskanten, der entlang einer Längskante eine Längsnut und entlang der zweiten Längskante ein zur Längsnut passendes Rastelement aufweist, **dadurch gekennzeichnet** , daß der Verschlußbereich (4-6-8-9) einen höheren Vernetzungsgrad aufweist als der schrumpfende Manschettenbereich (2) , daß die Längsnut (10) entlang des einen ungeweiteten Längsrandes aus zwei gegeneinander geneigten, längsverlaufenden Schenkeln (8, 9) gebildet ist, daß das Rastelement (3) am anderen ungeweiteten Längsrand hakenförmig ausgebildet ist, wobei der Winkel des zurückgebogenen, zur Längsnut (10) weisenden Hakenteils (4) dem Neigungswinkel des einen hinterschnittenen Schenkels (9) der Längsnut (10) angepaßt ist, daß das Rastelement (3) einen federnden Ansatz (5) aufweist, der auf die Weite des Nutgrundes abgestimmt ist und daß der Längsspalt der Längsnut (10) so gewählt ist, daß das Rastelement (3) mit dem federnden Ansatz (5) rastend eindrückbar ist.

2. Längsgeteilte Manschette nach Anspruch 1,**dadurch gekennzeichnet**, daß die Neigung des Schenkels (9) und des daran anliegenden, eingerasteten Hakenteils (4) des Rastelementes (3), sowie der mittlere Kraftübertragungspunkt (11) in Bezug auf den schrumpfbaren Manschettenteil (2) so abgestimmt sind, daß der Verschlußbereich (4-6-8-9) im geschrumpften Zustand möglichst drehmomentenfrei ist.

3. Längsgeteilte Manschette nach einem der vorhergehenden Ansprüche, **dadurch gekennzeichnet**, daß das Versetzungsmaß (a) zwischen dem mittleren Kraftübertragungspunkt (11) und der mittleren Wandungsebene des geweiteten Manschetteils (2) möglichst gering, vorzugsweise Null ist.

4. Längsgeteilte Manschette nach einem der vorhergehenden Ansprüche, **dadurch gekennzeichnet**, daß der ungeweitete Verschlußbereich (4-6-8-9) bei Schrumpftemperatur dehnfähig ist.

5. Längsgeteilte Manschette nach einem der vorhergehenden Ansprüche, **dadurch gekennzeichnet**, daß der federnde Ansatz (5) des Rastelementes (3) als langgestreckte Lippe ausgebildet ist.

6. Längsgeteilte Manschette nach einem der vorhergehenden Ansprüche, **dadurch gekennzeichnet**, daß der zweite Schenkel (8) der Längsnut - (10) und das Rastelement (3) an den äußeren Begrenzungen gegensinnig abstehende Ansätze (7) aufweisen, so daß zwei längsverlaufende Außennuten (18) gebildet sind.

7. Längsgeteilte Manschette nach einem der vorhergehenden Ansprüche, **dadurch gekennzeichnet**, daß die die Längsnut (10) aufweisende Längskante einen über den Verschlußbereich (4-6) der zweiten Längskante hinwegreichenden Untertritt (12) aufweist.

8. Längsgeteilte Manschette nach einem der vorhergehenden Ansprüche, **dadurch gekennzeichnet**, daß die Innenseite der Manschette (1) mit einem bei Wärmezufuhr aktivierbaren Kleber (13) beschichtet ist.

9. Längsgeteilte Manschette nach einem der vorhergehenden Ansprüche, **dadurch gekennzeichnet**, daß das Rastelement (3) in die Längsnut (10) mit Hilfe eines Verschließwerkzeuges (14) einführbar ist, wobei dieses Verschließwerkzeug - (14) aus zwei U-förmig zusammengefaßten keilförmigen Druckblechen (16) besteht, die in den beiden Außennuten (18) entlang ziehbar sind.

FIG 1

# FIG 2

# FIG 3